# DEMANDE DE BREVET EUROPEEN

(11) **EP 0 946 023 A1**
(43) Date de publication de la demande: **29.09.1999**
(21) Numéro de dépôt: 99400639.3
(22) Date de dépôt: 16.03.1999
(51) Int. Cl.: H04L 12/64, H04L 29/06, H04M 7/00

(54) **Procédé de communication en temps réel à travers un réseau informatique tel que l'Internet et équipement de communication pour la mise en oeuvre du procédé**

(30) Priorité: 17.03.1998 FR 9803244
(71) Demandeur: SAGEM S.A., 75016 Paris (FR)
(72) Inventeur: Menu, Michel, 95000 Cergy (FR)
(74) Mandataire: Bloch, Gérard

(57) **Abrégé**

Procédé de communication, à travers un réseau informatique de communication (101), entre au moins deux équipements de communication (23, 23') ayant des capacités relatives au réseau informatique (101) et une adresse électronique sur le réseau informatique (101), procédé au cours duquel on relie les deux équipements (23, 23') à un autre réseau de communication à travers lequel l'un des équipements (23) appelle et sonne l'autre équipement (23'), puis les deux équipements (23, 23') se mettent automatiquement en relation l'un avec l'autre à travers le réseau informatique (101) afin de communiquer l'un avec l'autre en temps réel à travers le réseau informatique (101).

## Description

Dans le domaine de la communication, un réseau informatique tel que l'Internet permet à des terminaux (télécopieurs, ordinateurs personnels, .), généralement connectés à l'Internet par un fournisseur d'accès, de communiquer entre eux.

Il existe différentes façons de communiquer à travers l'Internet.

Un premier mode consiste à s'envoyer des courriers électroniques acheminés par l'Internet. Dans ce cas, l'émetteur et le récepteur du courrier ne se connectent généralement pas simultanément à l'Internet et ne communiquent pas en direct l'un avec l'autre, mais par boîtes à lettres interposées.

Un second mode de communication sur l'Internet consiste à dialoguer en direct, c'est-à-dire en temps réel. Plusieurs interlocuteurs, connectés à l'Internet, peuvent ainsi converser entre eux, notamment par écrit, en tapant sur leur clavier d'ordinateur des messages qui apparaissent presque simultanément sur les écrans d'ordinateur de leurs interlocuteurs. L'Internet permet également des conversations parlées en direct.

L'un des intérêts actuels de l'Internet est que ce réseau offre des communications bon marché. En effet, les interlocuteurs connectés à l'Internet, par exemple par liaison téléphonique, ne paient que le coût de la communication téléphonique avec leur fournisseur d'accès et il s'agit généralement d'une communication locale. Un tel réseau s'avère donc particulièrement attractif, notamment pour les communications à longue distance.

Cependant, pour que deux interlocuteurs puissent communiquer l'un avec l'autre en temps réel sur l'Internet, ils doivent se connecter simultanément à l'Internet et se mettre en relation l'un avec l'autre, par exemple en se connectant à un serveur IRC (Internet relay chat - discussion par relais sur l'Internet). Dans le cas où l'un des interlocuteurs n'est pas connecté à l'Internet, l'autre interlocuteur n'a généralement pas la possibilité d'établir une communication avec lui à travers l'Internet.

Sur l'Internet, il s'avère donc difficile de "sonner" un terminal afin de communiquer avec lui. Cette difficulté tient au fait que l'Internet est un réseau informatique, c'est-à-dire un réseau d'ordinateurs reliés entre eux, prévu à l'origine pour faire communiquer entre eux des ordinateurs connectés en permanence, sans qu'il soit nécessaire de les "sonner" pour communiquer avec eux. Le problème de l'invention est donc lié non seulement à l'Internet, mais plus généralement aux réseaux informatiques de communication.

Certains fournisseurs de services de l'Internet proposent, sur requête d'un terminal appelant, de "sonner" un terminal non connecté à l'Internet, par le réseau téléphonique. Mais un tel service est payant.

L'invention propose de résoudre le problème évoqué ci-dessus, de façon plus économique.

A cet effet, l'invention concerne un procédé de communication, à travers un réseau informatique de communication, entre au moins deux équipements de communication ayant des capacités relatives au réseau informatique et une adresse électronique sur le réseau informatique, procédé au cours duquel on relie les deux équipements à un autre réseau de communication à travers lequel l'un des équipements appelle et sonne l'autre équipement, puis les deux équipements se mettent automatiquement en relation l'un avec l'autre à travers le réseau informatique afin de communiquer l'un avec l'autre en temps réel à travers le réseau informatique, l'un des équipements, ayant une adresse électronique dynamique sur le réseau informatique, transmettant son adresse électronique dynamique par courrier électronique à l'autre équipement à travers le réseau informatique.

L'invention consiste donc à utiliser un réseau de communication autre que ledit réseau informatique pour sonner l'équipement appelé et la messagerie électronique de ce réseau informatique pour transmettre l'adresse électronique dynamique de l'un au moins des équipements vers l'autre équipement.

Avantageusement, les deux équipements s'échangent une signalisation, à travers ledit autre réseau, afin de communiquer en temps réel l'un avec l'autre à travers ledit réseau informatique.

Les équipements peuvent s'échanger leurs adresses électroniques respectives sur le réseau informatique et leurs capacités respectives relatives au réseau informatique, à travers ledit autre réseau.

De préférence, les deux équipements établissant une communication l'un avec l'autre à travers l'autre réseau, ils interrompent ladite communication à travers l'autre réseau avant de se connecter au réseau informatique, de façon automatique, afin de se mettre en relation l'un avec l'autre à travers le réseau informatique.

Ainsi, tout se passe comme si les deux équipements, l'appelant et l'appelé, entamaient une communication à travers l'autre réseau de communication pour la poursuivre automatiquement à travers le réseau informatique.

L'invention concerne également un équipement de communication agencé pour communiquer à travers un réseau informatique et à travers un autre réseau de communication et ayant des capacités relatives au réseau informatique et une adresse électronique sur le réseau informatique, comprenant des moyens pour échanger une signalisation avec un autre équipement de communication, à travers ledit autre réseau, afin de communiquer avec ledit autre équipement en temps réel à travers le réseau informatique, et des moyens pour se mettre automatiquement en relation avec ledit autre équipement à travers le réseau informatique afin de communiquer en temps réel à travers le réseau informatique, équipement caractérisé par le fait qu'il comprend des moyens pour additionner localement des communications afin de communiquer avec au moins deux autres équipements à travers le réseau informatique.

L'invention sera mieux comprise à l'aide de la description suivante d'un mode de réalisation particulier du procédé de communication de l'invention et d'une forme de réalisation particulière de l'équipement de l'invention, en référence au dessin annexé sur lequel:

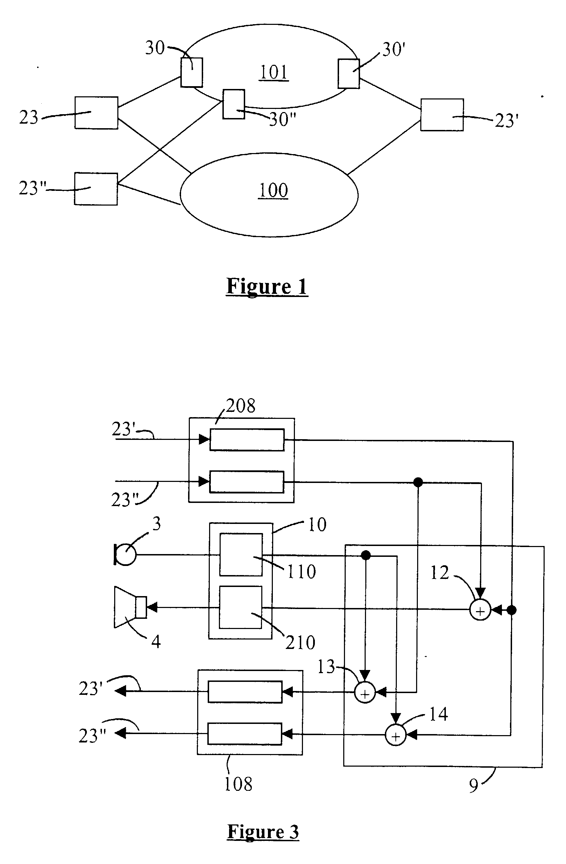

- la figure 1 représente une vue schématique d'équipements de communication et de deux réseaux de communication et
- la figure 2 représente un schéma bloc fonctionnel de l'équipement de communication de l'invention, selon la forme de réalisation particulière et
- la figure 3 qui représente un schéma bloc fonctionnel d'un bloc d'addition de l'équipement de la figure 2.

Le procédé de communication de l'invention permet à plusieurs équipements de communication 23, 23', 23" de communiquer entre eux, ici par la parole, en temps réel, à travers un réseau informatique de communication, en l'espèce l'Internet 101. Chaque équipement de communication 23 (23', 23") dispose d'un accès à l'Internet 101 auprès d'un fournisseur d'accès 30 (30', 30"), d'une adresse électronique sur l'Internet et de capacités relatives à l'Internet, appelées capacités Internet par la suite. Ces capacités Internet sont ici des capacités pour communiquer en temps réel à travers l'Internet 101 (types d'applications et de codage supportés par l'équipement pour communiquer à travers l'Internet, par la voix, par télécopie, par visiophonie, etc).

L'un des équipements de communication, tous identiques, va d'abord être décrit.

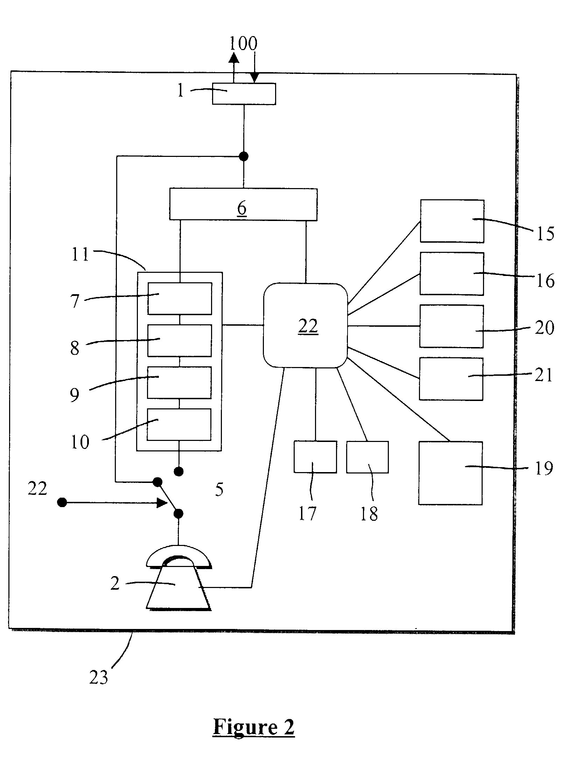

L'équipement de communication 23, représenté sur la figure 2, comprend une prise 1 de connexion à un réseau téléphonique de communication, en l'espèce le réseau téléphonique commuté (RTC) 100, un bloc de téléphonie 2, un ensemble 11 de communication vocale à travers l'Internet 101 et un modem 6.

Le modem 6 est interposé entre la prise 1 et l'ensemble 11 et un commutateur 5 est disposé entre le bloc de téléphonie 2, l'ensemble 1 1 et la prise 1.

Le commutateur 5 peut prendre deux positions: une position de communication à travers le réseau RTC 100 et une position de communication à travers l'Internet 101. En position de communication à travers le réseau téléphonique 100, le commutateur 5 relie le bloc de téléphonie 2 directement à la prise RTC 1, et en position de communication à travers l'Internet 101, le commutateur 5 relie le bloc de téléphonie 2 à la prise RTC 1, par l'intermédiaire de l'ensemble 11 et du modem 6.

Le bloc de téléphonie 2 comporte les éléments classiques d'un téléphone agencé pour communiquer à travers le réseau RTC 100, et notamment un microphone 3 et un haut-parleur 4.

L'ensemble 11 de communication vocale à travers l'Internet 101 comprend, entre le commutateur 5 et le modem 6:
- un bloc 10 de conversion analogique/numérique et numérique/analogique comportant un convertisseur analogique/numérique CAN 110 et un convertisseur numérique/analogique CNA 210,
- un bloc d'addition 9, explicité plus loin,
- un bloc 8 de compression/décompression comportant un compresseur 108 de données vocales et un décompresseur 208 de données vocales et
- un bloc 7 agencé pour décomposer des fichiers de données vocales en paquets de données à émettre à travers l'Internet 101, et pour recomposer des fichiers de données vocales à partir de paquets de données reçus par l'Internet 101, suivant un protocole de communication sur l'Internet 101, ici le protocole standard TCP/IP.

Le modem 6 est destiné, en émission, à moduler les données à émettre, autrement dit à les transformer en signaux analogiques destiné à transiter à travers le réseau RTC 100 et, en réception, à démoduler les signaux analogiques reçus par le réseau RTC 100 en les transformant en données correspondantes.

Pour le cas où l'équipement 23 est en communication avec plusieurs correspondants, il est en outre prévu, dans l'ensemble 11, plusieurs voies de transport, de données ou de signaux analogiques, attribuées chacune à un correspondant.

Le bloc d'addition 9 (figure 3) est prévu pour, le cas échéant, additionner, mélanger, localement les conversions parlées de plusieurs correspondants. La figure 3 représente un schéma fonctionnel du bloc 9, dans le cas où l'équipement 23 est en communication avec deux autres équipements correspondants 23' et 23".

Le bloc d'addition 9 comprend:
- un additionneur 12 relié en entrée aux différentes voies sortant du décompresseur 208 et en sortie au haut-parleur 4, par l'intermédiaire du convertisseur CNA 210, et
- une pluralité d'additionneurs 13, 14 reliés chacun, en entrée, à la pluralité de voies sortant du décompresseur 208, à l'exception d'une seule voie attribuée à un correspondant donné, ainsi qu'au microphone 3 par l'intermédiaire du convertisseur CAN 110 et, en sortie, à la voie entrant dans le compresseur 108 et attribuée à ce correspondant donné.

L'équipement 23 comprend en outre un bloc 15 de connexion à l'Internet 101, un bloc 16 d'échange d'une signalisation pour communiquer en temps réel à travers l'Internet 101, un bloc 20 de mise en relation avec un correspondant à travers l'Internet 101, un bloc 21 de mise en garde des applications de l'équipement 23, une mémoire 17 de stockage des capacités Internet et de l'adresse Internet de l'équipement 23, une mémoire 18 de stockage d'un agenda de correspondants et une interface homme-machine 19.

Enfin, il est prévu un bloc de contrôle 22, ici un microprocesseur, auquel sont reliés tous les éléments de l'équipement 23, destiné à contrôler le fonctionnement de l'équipement 23 et à exécuter les logiciels chargés dans l'équipement 23.

Le bloc 15 comporte un protocole de connexion à l'Internet 101. Il s'agit ici d'un protocole standard de connexion téléphonique à l'Internet 101, le protocole PPP (Point to point protocol - protocole point à point), par le biais duquel l'équipement 23 peut se connecter à son fournisseur 30 d'accès à l'Internet 101.

Le bloc 16 comprend un protocole d'échange d'une signalisation pour communiquer en temps réel à travers l'Internet 101. Par le biais de ce protocole, l'équipement 23 peut, lors d'une communication avec un équipement correspondant à travers le réseau téléphonique 100, envoyer à cet équipement correspondant ses capacités Internet et son adresse Internet, stockées dans la mémoire 17, et, le cas échéant recevoir les capacités Internet et l'adresse Internet de l'équipement correspondant, comme cela sera explicité dans la description du procédé de communication.

Le bloc de mise en relation 20 comporte une application pour mettre en relation l'équipement 23 avec un équipement correspondant à travers l'Internet 101, par envoi d'une requête de mise en relation au fournisseur d'accès 30, comme cela sera explicité dans le description du procédé de communication.

Le bloc de mise en garde 21 comporte une mémoire de stockage d'une musique d'attente et une application pour lancer la diffusion de cette musique au haut-parleur 4, comme explicité plus loin.

L'agenda de correspondants comprend les identités d'une pluralité de correspondants auxquelles sont associées des numéros d'appel téléphonique, des capacités relatives à l'Internet 101 et des adresses électroniques sur l'Internet 101.

Enfin, l'interface homme-machine 19 comprend un clavier de saisie et un écran d'affichage.

On soulignera que les blocs 7-10, 15-16 et 20-21 sont des blocs fonctionnels qui représentent en fait des logiciels chargés dans l'équipement 23 et exploitables, exécutables par le microprocesseur 22.

Après la description structurelle et fonctionnelle de l'équipement 23, le procédé de communication d'une pluralité d'équipements (23, 23', 23") similaires à celui décrit ci-dessus, va maintenant être décrit.

Par souci de clarté, les éléments de l'équipement 23 et ceux correspondants des équipements 23' et 23" seront désignés par les mêmes références respectivement non primées, primées et doublement primées.

### 1) Procédé de communication, à travers l'Internet 101, entre deux équipements de communication 23, 23'

On relie les deux équipements 23, 23' au réseau téléphonique 100, par leurs prises 1, 1'.

Dans les deux équipements 23 et 23', les commutateurs 5 et 5' sont initialement en position de communication à travers le réseau téléphonique 100.

Sur commande d'un opérateur, et à l'aide du bloc de téléphonie 2, l'équipement 23 appelle et sonne l'équipement 23' à travers le réseau téléphonique 100. Un opérateur de l'équipement 23' décroche l'équipement 23' de sorte qu'une communication s'établit entre les deux équipements 23 et 23', à travers le réseau téléphonique 100.

Au début de leur communication à travers le réseau téléphonique 100, les équipements 23 et 23', sous la commande de leurs microprocesseurs respectifs 22, 22', lancent et exécutent le protocole (16, 16') d'échange d'une signalisation afin de communiquer l'un avec l'autre en temps réel à travers l'Internet 101. Au cours de ce protocole d'échange, l'équipement 23 transmet ses capacités Internet et son adresse Internet à l'équipement 23' qui les enregistre dans sa mémoire 18', et, réciproquement, l'équipement 23' transmet ses capacités Internet et son adresse Internet à l'équipement 23 qui les enregistre dans sa mémoire 18. En outre, après s'être échangés leurs capacités Internet et leurs adresses Internet, les deux équipements correspondants 23, 23' se signalent, par une trame de protocole, qu'ils souhaitent poursuivre à travers l'Internet 101 la communication en temps réel entamée à travers le réseau téléphonique 100.

### Pendant l'échange de signalisation, les haut-parleurs 4, 4' des deux équipements 23, 23' diffusent la musique d'attente (21, 21').

Il pourrait également être prévu que les deux équipements 23, 23' se signalent implicitement qu'ils souhaitent poursuivre la communication à travers l'Internet 101, par le simple échange de leurs capacités Internet et de leurs adresses Internet respectives. Dans ce cas, les capacités Internet et les adresses Internet constituent une signalisation pour communiquer en temps réel à travers l'Internet 101.

Après avoir exécuté le protocole d'échange, les deux équipements 23 et 23' raccrochent automatiquement, sans intervention de leurs opérateurs respectifs, en interrompant ainsi leur communication à travers le réseau téléphonique 100.

Bien que les équipements aient "raccroché", leurs applications et ainsi leurs opérateurs respectifs sont maintenus en garde (21, 21') entre l'interruption de la communication à travers le réseau téléphonique 100 et le début de la communication à travers l'Internet 101. Les haut-parleurs 4, 4' diffusent la musique d'attente (21, 21') afin de faire patienter les opérateurs. Le "raccrochage" automatique et l'étape suivante de mise en relation des deux équipements 23, 23' l'un avec l'autre, décrite ci-dessous, sont donc des étapes transparentes pour les opérateurs qui attendent la poursuite de la communication, sans intervenir.

Après l'interruption de la communication à travers le réseau téléphonique 100, de façon automatique, chaque équipement 23 (23') bascule son commutateur 5 (5') en position de communication à travers l'Internet 101 et se connecte à l'Internet 101, par son fournisseur d'accès 30 (30'), en lançant le protocole de connexion PPP (15(15')) sous la commande du microprocesseur 22 (22').

Puis, l'un des deux équipements, ici l'équipement 23, lance, toujours automatiquement, l'application de mise en relation à travers l'Internet 101 (20), sous la commande du microprocesseur 21, et envoie à son fournisseur d'accès 30 l'adresse Internet de l'équipement correspondant 23', avec lequel il souhaite se mettre en relation à travers l'Internet 101, ainsi qu'une requête de mise en relation.

Par adresse Internet, on entend ici désigner une adresse Internet textuelle. A chaque adresse Internet textuelle correspond un équivalent numérique, appelé "adresse IP" (Internet Protocol - protocole Internet). Les adresses Internet et les adresses IP sont donc deux formes différentes d'adresses électroniques sur l'Internet 101. Pour acheminer à destination les données, l'Internet 101 utilise les adresses IP numériques.

Dans l'exemple particulier de la description, chaque équipement 23 (23') a une adresse Internet textuelle fixe mais une adresse IP correspondante dynamique, attribuée et régulièrement modifiée par le fournisseur d'accès 30 (30'). Typiquement, l'adresse Internet IP dynamique d'un équipement de communication change à chaque connexion de cet équipement à son fournisseur d'accès à l'Internet 101. Les adresses IP des équipements 23 et 23' sont donc temporaires, il en résulte que, pour que les équipements 23 et 23' communiquent en temps réel l'un avec l'autre à travers l'Internet 101, ils doivent s'informer mutuellement de leurs adresses IP respectives actuelles, afin de pouvoir communiquer l'un avec l'autre en temps réel.

A la réception de la requête de mise en relation et de l'adresse Internet textuelle de l'équipement correspondant 23', le fournisseur d'accès 30 envoie au fournisseur d'accès 30', l'adresse Internet textuelle de l'équipement 23' avec une requête aux fins d'obtenir l'adresse IP actuelle équivalente. Le fournisseur d'accès 30' vérifie que l'équipement correspondant 23' est connecté et renvoie l'adresse IP actuelle de l'équipement 23' au fournisseur d'accès 30 qui la retransmet à l'équipement 23 et celui-ci l'enregistre dans l'agenda de correspondants 18.

L'équipement 23 est alors en mesure de transmettre vers l'équipement 23' des données de voix et, sous la commande du microprocesseur 22, le haut-parleur 4 cesse de diffuser la musique d'attente. L'opérateur de l'équipement 23 saisit alors un message vocal à l'aide du microphone 3 du bloc de téléphonie 2. Le microphone 3 transforme le message vocal en signaux de voix analogiques que le convertisseur CAN 110 numérise en un fichier de données de voix. Celui-ci est comprimé par le compresseur 108 puis décomposé par le bloc 7 en paquets de données, par le biais du protocole TCP/IP. Enfin, les paquets de données sont modulés par le modem 6 avant d'être transmis au fournisseur d'accès 30 via le réseau téléphonique 100, puis acheminés vers l'équipement correspondant 23', à travers l'Internet 101.

En réception, les paquets de données sont reçus par le fournisseur d'accès 30' qui les retransmet, sous forme modulée (c'est-à-dire sous forme de signaux analogiques), via le réseau téléphonique 100, à l'équipement 23'. Dans l'équipement 23', le modem 6' démodule les signaux analogiques en les transformant en paquets de données. Le bloc 7' recompose le fichier de données de voix comprimé à partir des paquets de données reçus, le décompresseur 208' décomprime le fichier de données de voix comprimé, le convertisseur CNA 210' convertit les données de voix décomprimées en signaux de voix analogiques et enfin le haut-parleur 4' cesse de diffuser la musique d'attente et diffuse le message vocal de l'opérateur de l'équipement 23.

Les paquets de données acheminés à travers l'Internet 101 contiennent l'adresse IP numérique de leur provenance, autrement dit l'adresse IP actuelle de l'équipement 23. A la réception des paquets de données, l'équipement 23', sous la commande du microprocesseur 21', saisit l'adresse IP actuelle de l'équipement 23 et l'enregistre dans la mémoire 18' de stockage de l'agenda de correspondants, avec l'adresse Internet textuelle et l'identité de l'équipement 23.

L'équipement 23' disposant de l'adresse IP actuelle de l'équipement 23, il est alors en mesure de lui transmettre des paquets de données pour communiquer en temps réel. A l'aide du microphone 3', l'opérateur de l'équipement 23' saisit un message vocal qui est numérisé en un fichier de données. Celui-ci est ensuite comprimé, décomposé en paquets de données et enfin modulé avant d'être transmis vers l'équipement 23, à travers l'Internet 101, de la même manière que cela vient d'être explicité ci-dessus.

Les deux équipements 23, 23' peuvent ainsi converser l'un avec l'autre, par la parole, en temps réel à travers l'Internet 101, en s'échangeant des messages vocaux, comme précédemment explicité.

Dans la description qui vient d'être faite, l'équipement 23 émet une requête de mise en relation avec l'équipement 23' et reçoit en retour l'adresse IP actuelle de l'équipement 23'. On pourrait également prévoir que ce soit l'équipement 23' qui émette une requête de mise en relation avec l'équipement 23 et reçoive en retour l'adresse IP actuelle de l'équipement 23, ou encore que les deux équipements 23 et 23' émettent respectivement deux requêtes croisées pour se mettre en relation l'un avec l'autre et reçoivent respectivement en retour l'adresse IP actuelle de l'équipement 23' et l'adresse IP actuelle de l'équipement 23.

### 2) Procédé de communication, à travers l'Internet 101, entre trois équipements de communication 23, 23', 23"

Dans ce cas, les équipements 23' et 23" communiquent l'un avec l'autre, en temps réel, à travers l'Internet 101. On relie le troisième équipement 23 au réseau RTC 100 et, sous la commande d'un opérateur, l'équipement 23 appelle et sonne l'équipement 23' disposant d'un signal d'appel.

A la réception du signal d'appel, à l'aide d'un récepteur classique non représenté, l'opérateur de l'équipement 23' appuie sur une touche spécifique du clavier de saisie afin de mettre en attente sa communication avec l'équipement 23" à travers l'Internet 101 et d'établir une communication avec l'équipement 23 à travers le réseau téléphonique 100. Au cours de cette communication, l'équipement 23' et l'équipement 23 s'échangent leurs capacités Internet respectives et leurs adresses électroniques respectives sur l'Internet, par le protocole d'échange précédemment explicité, et se signalent qu'ils souhaitent poursuivre leur communication à travers l'Internet 101. L'équipement 23', connaissant son adresse IP actuelle fournie par son fournisseur d'accès 30, transmet celle-ci à l'équipement 23.

L'équipement 23 raccroche automatiquement et l'opérateur de l'équipement 23' appuie à nouveau sur la touche spécifique du clavier de saisie afin de reprendre la communication avec l'équipement 23", à travers l'Internet 101.

Pendant la communication entre l'équipement 23 et l'équipement 23', à travers le réseau téléphonique 100, la communication à travers l'Internet par le protocole TCP/IP, autrement dit le "lien TCP/IP", entre l'équipement 23' et l'équipement 23" est momentanément suspendu. Cette suspension est brève et tolérable par le protocole, de sorte qu'elle ne provoque pas la déconnexion de l'Internet 101 pour les équipements 23' et 23".

Après raccrochage de l'équipement 23, de façon automatique, comme explicité précédemment, l'équipement 23 se connecte à l'Internet 101. L'opérateur de l'équipement 23 saisit au microphone 3 un message vocal qui est converti en un fichier de données, celui-ci est comprimé puis décomposé, suivant le protocole TCP/IP, en paquets de données envoyés à travers l'Internet 101 à l'adresse IP de l'équipement 23". Les trois équipements 23, 23' et 23" se mette ainsi en relation à travers l'Internet 101 pour communiquer à trois en temps réel.

Les paquets de données, transmis par l'équipement 23 et reçus par l'équipement 23', contenant l'adresse IP de l'équipement 23, l'équipement 23' saisit et enregistre celle-ci dans la mémoire 18 afin d'adresser les paquets de données à transmettre à l'équipement 23 à l'adresse IP de celui-ci.

Dans l'équipement 23', les conversations parlées des trois équipements 23, 23' et 23" sont localement mélangées. Dans le bloc d'addition 9', l'additionneur 12' additionne les données de voix décomprimées provenant de l'équipement 23' et de l'équipement 23" puis le CNA 210' les convertit en signaux analogiques de parole fournis au haut-parleur 4' qui diffuse les messages vocaux des opérateurs des équipements 23" et 23. L'additionneur 13' additionne les données vocales décomprimées provenant de l'équipement 23 et les données vocales fournies par le microphone 3', par l'intermédiaire du convertisseur CAN 110'. Le compresseur 108' comprime toutes ces données vocales, correspondant aux messages vocaux mélangés des opérateurs des équipements 23' et 23, puis le bloc 7' les décompose en paquets de données qui sont transmis vers l'équipement 23" à travers l'Internet 101. De même, l'additionneur 14' additionne les données vocales décomprimées provenant de l'équipement 23" et les données vocales fournies par le microphone 3', par l'intermédiaire du convertisseur CAN 110', le compresseur 108' comprime ces données vocales, correspondant aux messages vocaux mélangés des opérateurs des équipements 23' et 23", le bloc 7' les décompose en paquets de données qui sont transmis vers l'équipement 23, à travers l'Internet 101.

Bien sûr, on pourrait, de la même manière, envisager des communications entre quatre équipements et plus.

Dans un autre forme de réalisation de l'invention, les deux équipements correspondants comprennent un bloc de messagerie électronique Internet et disposent chacun, auprès d'un fournisseur d'accès à l'Internet, d'une boîte à courriers électroniques et d'une adresse Internet, autrement dit une adresse électronique fixe, constituant une adresse de courrier électronique. Le bloc de messagerie électronique comprend un module de préparation de courriers électroniques, un module d'émission de courriers électroniques à travers l'Internet et un module de réception de courriers électroniques transmis à travers l'Internet.

Lors du procédé de communication à travers l'Internet des deux équipements, l'un des deux équipements appelle et sonne l'autre équipement à travers le réseau téléphonique, comme précédemment explicité. Après établissement de la communication téléphonique, les deux équipements s'échangent, à travers le réseau téléphonique, une signalisation pour se mettre en relation l'un avec l'autre à travers l'Internet, comme précédemment explicité, ainsi que leurs adresses respectives de courrier électronique. Puis les équipements interrompent leur communication téléphonique, se connectent à l'Internet et obtiennent ainsi une adresse IP. L'un au moins des deux équipements prépare alors un courrier électronique contenant son adresse IP et l'envoie, à travers l'Internet, vers l'adresse de courrier électronique de l'autre équipement. Par souci de clarté, on qualifiera par la suite l'équipement qui émet le courrier électronique et celui auquel il est destiné, d'équipement émetteur et d'équipement destinataire respectivement. Le courrier électronique, transmis à travers l'Internet, est reçu et provisoirement stocké dans la boîte à courriers électroniques de l'équipement destinataire. Celui-ci, après interruption de la communication téléphonique avec l'équipement émetteur, consulte de façon répétitive sa boîte à courriers électroniques jusqu'à y trouver le courrier électronique de l'équipement émetteur, télécharge ce courrier et en extrait l'adresse IP de l'équipement émetteur. L'équipement destinataire envoie alors à l'équipement émetteur son adresse IP, par des paquets de données IP, et entame ainsi la communication en temps réel avec l'équipement émetteur, à travers l'Internet.

Dans une variante plus perfectionnée de réalisation de l'invention, l'équipement de communication comprend un bloc répondeur/enregistreur comprenant une mémoire de stockage d'une annonce vocale d'invitation à laisser un message, une mémoire de stockage de messages de correspondants, une application de répondeur pour diffuser l'annonce vocale et une application d'enregistreur pour enregistrer, le cas échéant, le message d'un correspondant.

Dans le cas où l'équipement de communication, appelé équipement A par la suite, communique en temps réel à travers l'Internet avec un équipement correspondant B lorsqu'un troisième équipement C l'appelle et le sonne, si l'opérateur de l'équipement A décide de ne pas prendre l'appel (c'est-à-dire de ne pas communiquer de vive voix avec l'opérateur de l'équipement C) l'équipement A échange quand même avec l'équipement C une signalisation, à travers le réseau téléphonique, pour poursuivre la communication à travers l'Internet. Puis, comme précédemment explicité, l'équipement C se met en relation, à travers l'Internet avec l'équipement A. Celui-ci ne mêle pas l'équipement C à la conversation en cours avec l'équipement B, mais active son bloc répondeur/enregistreur et aiguille l'équipement C sur les applications répondeur/enregistreur de façon à inviter l'opérateur de l'équipement C à laisser un message. Le bloc répondeur/enregistreur fait ainsi fonction de répondeur/enregistreur sur l'Internet.

Les équipements de communication qui viennent d'être décrits sont des appareils de téléphonie, prévus pour des conversations parlées. L'invention s'applique également à tout autre type d'équipement de communication, et notamment aux téléphones mobiles, aux télécopieurs, aux visiophones, etc.

Enfin, dans la description qui précède, les équipements de communication sont reliés à l'Internet et au réseau téléphonique RTC par une seule ligne téléphonique RTC.

On pourrait également envisager d'autres configurations, et notamment les configurations suivantes, pour relier les équipements à l'Internet et à un réseau téléphonique :
- liaison à l'Internet par un réseau local LAN (Local Area Network) et liaison au réseau RTC par une ligne téléphonique RTC
- liaisons à l'Internet et au réseau RTC respectivement par deux lignes RTC ou
- liaisons à l'Internet et au réseau téléphonique par deux canaux d'une ligne RNIS (Réseau Numérique à Intégration de Services).

## Revendications

1. Procédé de communication, à travers un réseau informatique de communication (101), entre au moins deux équipements de communication (23, 23') ayant des capacités relatives au réseau informatique (101) et une adresse électronique sur le réseau informatique (101), procédé au cours duquel on relie les deux équipements (23, 23') à un autre réseau de communication à travers lequel l'un des équipements (23) appelle et sonne l'autre équipement (23'), puis les deux équipements (23, 23') se mettent automatiquement en relation l'un avec l'autre à travers le réseau informatique (101) afin de communiquer l'un avec l'autre en temps réel à travers le réseau informatique (101), l'un des équipements, ayant une adresse électronique dynamique sur le réseau informatique, transmettant son adresse électronique dynamique par courrier électronique à l'autre équipement à travers le réseau informatique.

2. Procédé selon la revendication 1, dans lequel, les deux équipements (23, 23') s'échangent une signalisation, à travers ledit autre réseau (100), afin de communiquer en temps réel l'un avec l'autre à travers ledit réseau informatique (101).

3. Procédé selon la revendication 2, dans lequel, les deux équipements (23, 23') s'échangent leurs adresses électroniques respectives sur ledit réseau informatique (101), à travers l'autre réseau (100).

4. Procédé selon l'une des revendications 2 et 3, dans lequel, les deux équipements (23, 23') s'échangent leurs capacités relatives au réseau informatique (101), à travers l'autre réseau (100).

5. Procédé selon l'un des revendications 1 à 4, dans lequel, les deux équipements (23, 23') établissant une communication l'un avec l'autre à travers l'autre réseau (100), ils interrompent ladite communication à travers l'autre réseau (100) avant de se connecter au réseau informatique (101), de façon automatique, afin de se mettre en relation l'un avec l'autre à travers le réseau informatique (101).

6. Procédé selon l'une des revendications 1 à 5, dans lequel dans le cas où l'équipement appelé (23') est en communication à travers ledit réseau informatique avec au moins un troisième équipement de communication (23") lorsque l'équipement appelant (23) l'appelle et le sonne, l'équipement appelé (23') met en attente sa communication avec le troisième équipement (23"), l'équipement appelé (23') et l'équipement appelant (23) s'échangent une signalisation, à travers l'autre réseau (100), afin de communiquer l'un avec l'autre en temps réel à travers le réseau informatique (101), puis l'équipement appelé (23') reprend sa communication avec le troisième équipement (23") et les trois équipements (23, 23', 23") se mettent en relation à travers le réseau informatique (101) afin de communiquer à trois en temps réel à travers le réseau informatique (101)

7. Procédé selon la revendication 6, dans lequel, en cas de communication entre au moins trois équipements (23, 23', 23") à travers le réseau informatique (101), l'un des équipements (23) additionne localement les communications des trois équipements (23, 23', 23").

8. Procédé selon l'une des revendications 1 à 7, dans lequel, dans le cas où l'équipement appelé est en communication à travers ledit réseau informatique avec au moins un troisième équipement de communication lorsque l'équipement appelant l'appelle et le sonne, l'équipement appelé et l'équipement appelant s'échangent une signalisation, à travers l'autre réseau, afin de communiquer l'un avec l'autre en temps réel à travers le réseau informatique, puis l'équipement appelant se met en relation, à travers le réseau informatique, avec l'équipement appelé qui aiguille l'équipement appelant sur une application de répondeur.

9. Equipement de communication agencé pour communiquer à travers un réseau informatique (101) et à travers un autre réseau de communication (100) et ayant des capacités relatives au réseau informatique (101) et une adresse électronique sur le réseau informatique (101), comprenant des moyens (16) pour échanger une signalisation avec un autre équipement de communication, à travers ledit autre réseau (100), afin de communiquer avec ledit autre équipement en temps réel à travers le réseau informatique (101), et des moyens (6, 15, 20, 22) pour se mettre automatiquement en relation avec ledit autre équipement à travers le réseau informatique (101) afin de communiquer en temps réel à travers le réseau informatique (101), équipement caractérisé par le fait qu'il comprend des moyens pour additionner localement des communications afin de communiquer avec au moins deux autres équipements à travers le réseau informatique.

10. Equipement selon la revendication 9, dans lequel, l'équipement établissant une communication avec l'autre équipement à travers ledit autre réseau (100), les moyens (6, 15, 20, 22) pour se mettre automatiquement en relation avec ledit autre équipement à travers le réseau informatique (101) sont agencés pour, de façon automatique, interrompre ladite communication à travers l'autre réseau (100) et pour connecter l'équipement au réseau informatique (101).

11. Equipement selon l'une des revendications 9 et 10, comprenant un bloc répondeur faisant fonction de répondeur sur le réseau informatique.
